# EUROPÄISCHE PATENTSCHRIFT

(11) **EP 0 472 067 B1**
(45) Veröffentlichungstag und Bekanntmachung des Hinweises auf die Patenterteilung: **18.03.1998**
(21) Anmeldenummer: 91113418.7
(22) Anmeldetag: 09.08.1991
(51) Int. Cl.: D01H 11/00

(54) **Ringspinn- oder Zwirnmaschine mit Absaugeinrichtung**
Ring spinning or twisting machine with suction device
Métier à filer ou à retordre à anneaux avec dispositif d'aspiration

(30) Priorität: 21.08.1990 CH 2703/90
(43) Veröffentlichungstag der Anmeldung: 26.02.1992
(73) Patentinhaber: MASCHINENFABRIK RIETER AG, CH-8406 Winterthur (CH)
(72) Erfinder: Wolf, Horst, W-8185 Winkel b. Bülach (DE); Lattion, André, CH-8472 Seuzach (CH)

(56) Entgegenhaltungen:
- DE-A- 2 244 668
- DE-A- 2 419 188
- DE-A- 3 642 038
- DE-A- 3 643 932
- FR-A- 2 232 628
- GB-A- 982 604
- US-A- 3 412 545
- PATENT ABSTRACTS OF JAPAN, Band 11, Nr. 262 (C-442)[2709], 25. August 1987; & JP-A-62 062 936 (NISSHINBO IND. INC.) 19-03-1987

## Beschreibung

Die vorliegende Erfindung betrifft eine Ringspinn- oder Zwirnmaschine gemäss Oberbegriff von Anspruch 1.

Solche Maschinen befinden sich in stetiger Entwicklung; so soll z.B. durch die Steigerung der Spindelwellendrehzahl oder durch eine Senkung des Wartungsaufwands die Produktivität der Maschine gesteigert werden, was bedeutet, dass die Kosten pro Einheit des herzustellendes Guts sinken.

GB-PS 982 604 zeigt nun eine Absaugvorrichtung an einer Maschine der genannten Art, welche auf jede der gekapselten Fadenführungseinrichtungen wirkt und so insbesondere Staub, Faserabrieb und z.B. beim Doffen anfallende, im Spinnbereich verbleibende Fadenreste entfernt. Dadurch wird ein störungsfreier Betrieb unterstützt und so der notwendige Wartungsaufwand verringert.

Wenn jeder Spinnstelle ein Motor zugeordnet ist, kann es notwendig sein, den Motor zu kühlen. Eine entsprechende Einrichtung ist aus der DE-A1 3 643 932 bekannt, gemäss der ein von der Spindel erzeugter Luftstrom zur Wärmeabfuhr auf den Motor geleitet wird, wobei ein quer durch eine topfartige Ummantelung der Spindel mit Oeffnungen im Mantel durchtretender Luftstrom zur Verfügung steht.

Insgesamt ist aber festzuhalten, dass die kostspielige Entsorgung der Spinn- oder Zwirnabfälle (Staub, Fasermaterial, Fadenabschnitte etc.) und der durch den Betrieb der Maschine anfallende Abwärme mit erhöhter Produktionsgeschwindigkeit steigen und die erzielten Vorteile schmälern.

Entsprechend ist es Aufgabe der vorliegenden Erfindung, solche Nachteile zu überwinden und eine Maschine zu schaffen, die die nachgeschaltete technische Infrastruktur entlastet, mithin mit geringerem technischem Aufwand realisierbar ist.

Diese Aufgabe wird durch die kennzeichnenden Merkmale gemäss Anspruch 1 gelöst.

Durch die Kühlung wird die Wärmeleistung des Spinnantriebs an der Quelle erfasst und gesamthaft zur Peripherie der Maschine transportiert. Somit steht an der Peripherie ein Abluftstrom zur Verfügung, welcher direkt in die Klimatisierungseinrichtung des Spinnsaals abgegeben werden kann, was zur Folge hat, dass die Luft des Maschinensaals kaum mehr erwärmt wird. Damit ist nicht wie bisher die gesamte Luft des Spinnsaals umzuwälzen und zu kühlen, bevor sich diese um nur einige wenige Grade erwärmt hat; die Klimatisierungseinrichtung hat nun einen vergleichsweise geringen Volumenstrom markant erhöhter Temperatur zu verarbeiten, was erlaubt, die gesamte Anlage generell kleiner zu dimensionieren. Weiter können auch die Wärmetauscher wegen des durch die grössere Temperaturdifferenz gegebenen besseren Wärmeübergangs verkleinert werden. Bei einer Klimatisierungseinrichtung, welche pro Spinnmaschine leicht mehr als 50 kW, somit in Spinnsälen von einigen Dutzend Maschinen beträchtliche Wärmemengen abzuführen hat, ergibt sich so eine erhebliche technische Vereinfachung der Anlage und eine entsprechende Reduktion der Investitions- und Betriebskosten, was die Kosten pro Einheit des hergestellten Guts wesentlich vermindert.

Weitere bevorzugte Ausführungsformen weisen Merkmale der abhängigen Ansprüche auf.

Ein Ausführungsbeispiel der Erfindung wird anhand der Zeichnungen näher erläutert.

Es zeigt:
- Fig. 1: rein schematisch einen Querschnitt durch eine Ringspinn- oder Zwirnmaschine mit doppelt geführten Abluftkanälen; und
- Fig. 2: rein schematisch eine Ansicht des Verlaufs der Abluft- bzw. Kühlkanäle im Bereich der Spindelwellenmotoren.

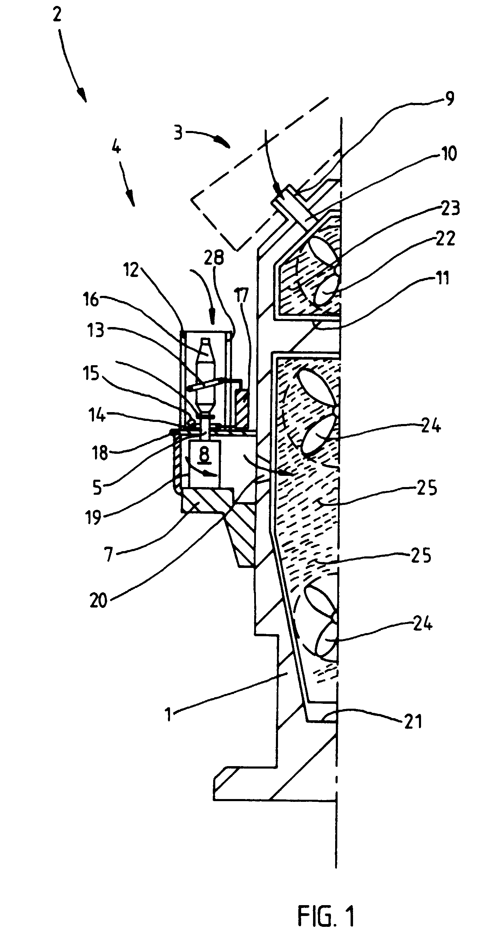

Fig. 1 zeigt einen symmetrischen Querschnitt durch eine Ringspinn- oder Zwirnmaschine, zur Entlastung der Figur ist die symmetrisch ausgebildete rechte Hälfte der Maschine weggelassen.

Dargestellt ist ein Maschinenrahmen 1 mit einer Spinneinheit 2, welche aus einem im Umriss angedeuteten Streckwerk 3 und einer Fadenführungseinrichtung 4 besteht. Weiter dargestellt ist eine Spindelwelle 5 und ein auf einer Lagerung 7 angeordneter Spindelwellenmotor 8.

Das Streckwerk 3 ist mit einer Luftabsaugleitung 9 versehen, welche über den Stutzen 10 in einen ersten, der Länge nach durch die Spinn- oder Zwirnmaschine verlaufenden Sammelkanal 11 mündet.

Die Fadenführungseinrichtung 4 ist von einer Kapselung 12 umschlossen; in der Kapselung 12 befinden sich ein Ballonbegrenzer 13, ein Einflanschring 14, ein an diesem laufenden Läufer 15 sowie ein auf der Spindelwelle 5 aufgesteckter Kops 16. Einflanschring 14 und Ballonbegrenzer 13 sind mit einer längs der Maschine verlaufenden Ringbank 17 verbunden.

Die Kapselung 12 ist durch ein Bodenstück 18 vom Spindelwellenantriebsmotor 8 getrennt; eine in der Fig. 1 nicht dargestellte Oeffnung im Bodenstück 18 schafft jedoch eine Verbindung zwischen der Fadenführungseinrichtung 4 und einem als Kühlluftleitung 19 ausgebildeten Raum, in dem Spindelwellenmotor 8 angeordnet ist. Der Kühlluftkanal 19 mündet über eine Oeffnung 20 in einen zweiten Sammelkanal 21.

Am Ende des längs der Ringspinn- oder Zwirnmaschine verlaufenden Sammelkanals 11 ist ein Ventilator 22 vorgesehen. Vor dem Ventilator befindet sich eine als Filter 23 ausgebildete Vorrichtung zum Entfernen von aus Fasern bestehendem Flug. Ebenso befindet sich am Ende des Sammelkanals 21 ein Ventilator 24 und davor eine als Filter 25 ausgebildete Vorrichtung zum Entfernen von aus Staub, Faserabrieb und Fadenabschnitten bestehendem Flug.

Wird nun die Spinn- oder Zwirnmaschine in Betrieb genommen, werden gleichzeitig die Ventilatoren 22,24 aktiviert, was zur Folge hat, dass Umgebungsluft einerseits durch den Bereich der Streckwerke 3 und andererseits durch die Kapselungen 12 angesaugt wird. Dabei werden durch den Betrieb der Streckwerke anfallende Fasern in den Sammelkanal 11 und durch den Betrieb der Fadenführungseinrichtungen 4 anfallender Staub und Faserabrieb sowie beim Doffen entstehende Fadenreste in den Sammelkanal 21 befördert. Entsprechend fallen im Filter 23 Fasern und im Filter 25 die Rückstände aus den Fadenführungseinrichtungen 4 an.

Während die Rückstände aus dem Filter 25 als Abfall entsorgt werden müssen, können die im Filter 23 gesammelten Fasern wieder verwendet, d.h. für einen weiteren Spinnprozess aufbereitet werden. Im Ergebnis vermindern sich so die Abfälle aus dem Spinn- oder Zwirnprozess, was die nachgeschaltete Infrastruktur entlastet, die Verwertung der Ausgangsmaterialien verbessert und so die Produktivität der Spinn- oder Zwirnmaschine erhöht.

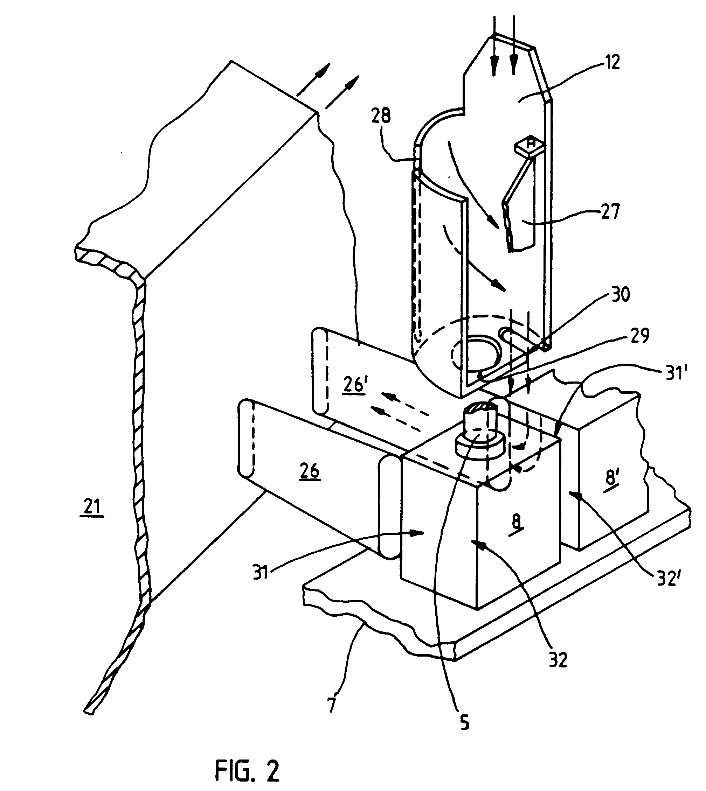

Fig. 2 zeigt eine Ansicht einer bevorzugten Anordnung der Luftwege von der Kapselung 12 bis hin zum Sammelkanal 21. Zur Entlastung der Figur sind Verschalungsteile und die Fadenführungseinrichtung 4 weggelassen.

In der Figur sind eine Kapselung 12, auf der Lagerung 7 angeordnete Spindelwellenmotoren 8,8' und in den Sammelkanal 21 mündende Kühlluftkanäle 26,26' dargestellt.

Die Kapselung 12 ist zylinderförmig ausgebildet und für automatisches Doffen oben offen gehalten. Frontseitig ist eine Türe 27 angeordnet, welche den Zugang zu der Fadenführungseinrichtung 4 erlaubt. An der Rückseite befindet sich eine als Schlitz 28 ausgebildete Oeffnung, durch welche die Träger für den Einflanschring 14 und den Ballonbegrenzer 13 ragen. In einem einstückig an der Kapselung 12 angeformten Bodenstück 29 ist eine Oeffnung 30 vorgesehen.

Die Spindelwellenmotoren 8,8' besitzen ein rechteckiges Gehäuse und sind im Abstand voneinander auf der Lagerung 7 angeordnet; die dadurch gebildeten Zwischenräume 31,31' sind nach oben durch die jeweilige Oeffnung 30 im Bodenstück 29 der Kapselung 12 und nach hinten durch die Kühlluftkanäle 26,26' begrenzt. Damit bilden die Seitenwände der Spindelwellenmotoren 8,8' Abschnitte der Kühlluftleitung zwischen der Kapselung 12 und dem Sammelkanal 21.

Im Betrieb des Ventilators 24 wird entsprechend den in Fig. 2 eingetragenen Pfeilen Luft durch die Kapselung 12 angesaugt, wobei in ihr anfallender Staub, Fadenabrieb und Fadenabschnitte mitgeführt werden. Zugleich führt der an den Spindelwellenmotoren 8,8' vorbeigeführte Luftstrom deren Abwärme ab, was dazu führt, dass die in den Sammelkanal 21 gelangende Luft um 15 bis 20 Grad wärmer ist als die die Maschine umgebende Luft.

Diese erwärmte Luft wird über einen in den Figuren nicht dargestellten Kühlluftstutzen an die Klimatisierungseinrichtung des Spinnsaals abgegeben. Damit erwärmt sich die Luft im Spinnsaal wesentlich langsamer, was zur Folge hat, dass diese nicht mehr wie bis anhin ca. 30 mal pro Stunde, sondern nur noch ca. 10 mal pro Stunde umgewälzt werden muss, um ein geeignetes Arbeitsklima aufrecht zu erhalten. Weiter wird die mit der Abwärme belastete Kühlluft als vergleichsweise geringer, aber um 10 bis 25°C erhitzter Abluftstrom direkt der Klimatisierungseinrichtung zugeführt. Unter diesen Bedingungen sind die technischen Anforderungen an die Klimatisierungseinrichtung erheblich gesenkt, was zu verminderten Investitions- und Betriebskosten des Spinn- oder Zwirnprozesses führt.

Vorzugsweise werden die Frontseiten der Zwischenräume 31,31' nicht verschalt, was zur Folge hat, dass durch die verbleibenden frontseitigen Oeffnungen 32,32' weitere Kühlluft angesaugt wird. Dadurch fliesst einerseits ein mit Flug beladener Kühlluftstromanteil von der Oeffnung 30 her an den Spindelwellenmotoren vorbei, während andererseits ein weiterer Kühlluftstromanteil aus Frischluft durch die in Strömungsrichtung vor den Spindelwellenmotoren angeordneten Oeffnungen 32,32' angesogen wird. Damit muss durch die Kapselungen 12 mit ihrem durch den Kops bedingten erhöhten Strömungswiderstand nur die für das Absaugen der anfallenden Rückstände nötige Luft hindurchgeführt werden, so dass der Ventilator 24 mit der geringstmöglichen Leistung gefahren werden kann. Bei einem weiteren, nicht dargestellten Ausführungsbeispiel sind zwar Verschalungen vorgesehen, welche die Frontseiten der Spindelwellenmotoren abdecken, aber ihrerseits den Oeffnungen 32,32' entsprechende Lufteintrittsöffnungen aufweisen, so dass ebenfalls ein aus Frischluft bestehender Kühlluftstromanteil zumischbar ist.

Weiter besitzt der Sammelkanal 21 vorteilhafterweise die doppelte Kapazität, ca. 10'000 m3h, gegenüber derjenigen des Sammelkanals 11, was einer optimalen Aufteilung des im Innern des Rahmens 1 vorhandenen für die Sammelkanäle verwendbaren Raums entspricht.

## Patentansprüche

1. Ringspinn- oder Zwirnmaschine mit einem Rahmen (1), mit darin angeordneten Spinneinheiten (2), welche je ein Streckwerk (3), eine durch eine Kapselung (12) umschlossene, aus einem Ballonbegrenzer (13), einem an einer Ringbank (17) angeordneten Einflanschring (14) und einem an diesem laufenden Läufer (15) bestehende Fadenführungseinrichtung (4) und eine Spindelwelle (5) mit Einzelspindelwellenantrieb aufweisen, sowie mit einer über Absaugleitungen durch Abluftöffnungen (30) der Kapselung (12) wirkenden Absaugvorrichtung (21; 24) für Faserabrieb und Fadenreste, dadurch gekennzeichnet, dass die Abluftöffnung (30) der Kapselung (12) dem Spindelwellenmotor (8) zugewandt ist und eine Verbindung zwischen der Fadenführungseinrichtung (4) und einem als Kühlluftkanal (19) ausgebildeten Raum schafft, in welchem Raum der Spindelwellenmotor (8) angeordnet ist, wobei der Kühlluftkanal (19) über eine Öffnung (20) hinter dem Spindelwellenmotor (8) in einen aus der Maschine hinaus führenden Sammelkanal (21) der Absaugvorrichtung mündet.

2. Ringspinn- oder Zwirnmaschine nach Anspruch 1, dadurch gekennzeichnet, dass der Kühlluftkanal (19) mindestens teilweise von einem Zwischenraum (31) zwischen benachbarten Spindelwellenmotoren (8, 8') gebildet ist.

3. Ringspinn- oder Zwirnmaschine nach Anspruch 1 oder 2, dadurch gekennzeichnet, dass anschliessend an den Sammelkanal (21) eine Vorrichtung (23) zum Entfernen von insbesondere Flug aus der Kühlluft vorgesehen ist.

4. Ringspinn- oder Zwirnmaschine nach einem der Ansprüche 1 bis 3, dadurch gekennzeichnet, dass ein Bodenstück (29) zu den Seitenwänden der Kapselung (12) die Abluftöffnung (30) aufweist.

5. Ringspinn- oder Zwirnmaschine nach einem der Ansprüche 1 bis 4, dadurch gekennzeichnet, dass die Spindelwellenmotoren (8, 8') mit durch sie hindurch verlaufenden Kühlluftkanälen versehen sind.

6. Ringspinn- oder Zwirnmaschine nach einem der Ansprüche 1 bis 5, dadurch gekennzeichnet, dass benachbarte Gehäuse der Spindelwellenmotoren (8, 8') Wandbereiche der zwischen ihnen gebildeten Zwischenräume (31, 31') bilden.

7. Ringspinn- oder Zwirnmaschine nach einem der Ansprüche 1 bis 6, dadurch gekennzeichnet, dass die Spindelwellenmotoren (8, 8') in Kühlluftleitungen (19) angeordnet sind.

8. Ringspinn- oder Zwirnmaschine nach einem der Ansprüche 1 bis 7, dadurch gekennzeichnet, dass in Strömungsrichtung des entsprechenden Kühlluftstromanteils vor dem jeweiligen Spindelwellenmotor (8, 8') eine Öffnung (32) zum Hinzumischen von Frischluft vorgesehen ist.

## Claims

1. A ring spinning or twisting machine with a frame (1), with spinning units (2) arranged therein which are each provided with a drafting arrangement (3), a thread guide device (4) which is enclosed by an enclosure (12) and comprises a balloon limiter (13), a single slip-on type flange (14) arranged on a ring rail (17) and a traveller (15) running on the same, as well as a spindle shaft (5) with individual spindle shaft drive, as well as with a suction apparatus (21; 24) for abraded fibres and fibre residues acting by way of suction lines through air evacuation openings (30) of the enclosure (12), characterized in that the air evacuation opening (30) of the enclosure (12) faces the spindle shaft motor (8) and creates a connection between the thread guide device (4) and a chamber arranged as a cooling air duct (19), in which chamber the spindle shaft motor (8) is arranged, with the cooling air duct (19) opening by way of an aperture (20) behind the spindle shaft motor (8) into a collecting duct (21) of the suction apparatus leading out of the machine.

2. A ring spinning or twisting machine as claimed in claim 1, characterized in that the cooling air duct (19) is formed at least partly by an intermediate space (31) between adjacent spindle shaft motors (8, 8').

3. A ring spinning or twisting machine as claimed in claim 1 or 2, characterized in that downstream of the collecting duct (21) there is provided an apparatus (23) for the removal of fly in particular from the cooling air.

4. A ring spinning or twisting machine as claimed in one of the claims 1 to 3, characterized in that a floor element (29) of the side walls of the enclosure (12) comprises the air evacuation openings (30).

5. A ring spinning or twisting machine as claimed in one of the claims 1 to 4, characterized in that the spindle shaft motors (8, 8') are provided with cooling air ducts which extend through the same.

6. A ring spinning or twisting machine as claimed in one of the claims 1 to 5, characterized in that adjacent casings of the spindle shaft motors (8, 8') form wall areas of the intermediate spaces (31, 31') formed between the same.

7. A ring spinning or twisting machine as claimed in one of the claims 1 to 6, characterized in that the spindle shaft motors (8, 8') are arranged in cooling air lines (19).

8. A ring spinning or twisting machine as claimed in one of the claims 1 to 7, characterized in that an opening (32) for the admixture of fresh air is provided in the direction of the flow of the respective portion of the cooling air flow before the respective spindle shaft motor (8, 8').

## Revendications

1. Machine à filer à anneaux ou machine à retordre avec, un cadre (1) ayant des unités de filage (2) disposées à l'intérieur de celui-ci, lesquelles possédent chacune, un train d'étirage (3), un arrangement de guidage de fil (4) entouré par un boîtier (12) et constitué par, un limitateur de ballon (13), un anneau à flange unique (14) disposé sur un banc porte-anneaux (17), et un curseur (15) se déplaçant sur cet anneau, et un arbre de broche (5) ayant un entraînement individuel d'arbre de broche, ainsi qu'avec un dispositif d'aspiration (21; 24) pour les débris et restes de fibres, agissant, via des conduites d'aspiration, à travers des ouvertures d'extraction d'air (30) pratiquées dans le boîtier (12),
caractérisée par le fait que
l'ouverture d'extraction d'air (30) du boîtier (12) fait face au moteur d'arbre de broche (8), et crée une liaison entre l'arrangement de guidage de fil (4) et une chambre formée comme canal d'air de refroidissement (19), chambre dans laquelle est disposé le moteur d'arbre de broche (8), et où le canal d'air de refroidissement (19) débouche, par une ouverture (20) située derrière le moteur d'arbre de broche (8), dans un canal collecteur (21) du dispositif d'aspiration, qui guide l'air hors de la machine.

2. Machine à filer à anneaux ou machine à retordre selon revendication 1,
caractérisée par le fait que
le canal d'air de refroidissement (19) est formé, au moins partiellement, par une chambre intermédiaire (31) située entre des moteurs d'arbre de broche (8, 8') voisins.

3. Machine à filer à anneaux ou machine à retordre selon revendication 1 ou 2,
caractérisée par le fait
qu'un dispositif (23) est prévu, à la suite du canal collecteur (21), pour extraire particulièrement le duvet de fibres de l'air de refroidissement.

4. Machine à filer à anneaux ou machine à retordre selon une des revendications 1 à 3,
caractérisée par le fait
qu'une pièce de base (29) pour les parois latérales du boîtier (12) possède l'ouverture d'extraction d'air (30).

5. Machine à filer à anneaux ou machine à retordre selon une des revendications 1 à 4,
caractérisée par le fait que
les moteurs d'arbre de broche (8, 8') sont pourvus de canaux d'air de refroidissement qui les traversent.

6. Machine à filer à anneaux ou machine à retordre selon une des revendications 1 à 5,
caractérisée par le fait que
les carters voisins des moteurs d'arbre de broche (8, 8') forment des zones de cloisonnement des chambres intermédiaires (31, 31') formées entre celles-ci.

7. Machine à filer à anneaux ou machine à retordre selon une des revendications 1 à 6,
caractérisée par le fait que
les moteurs d'arbre de broche (8, 8') sont disposés dans des conduites d'air de refroidissement (19).

8. Machine à filer à anneaux ou machine à retordre selon une des revendications 1 à 7,
caractérisée par le fait que,
dans le sens d'écoulement de la partie de courant d'air de refroidissement correspondante, une ouverture (32) est prévue devant chaque moteur d'arbre de broche (8, 8'), pour ajouter et mélanger de l'air frais.
